# EUROPÄISCHE PATENTSCHRIFT

(11) **EP 2 529 188 B1**
(45) Veröffentlichungstag und Bekanntmachung des Hinweises auf die Patenterteilung: **19.01.2022**
(21) Anmeldenummer: 11700684.1
(22) Anmeldetag: 24.01.2011
(51) Int. Cl.: G01D 5/353

(54) **SENSORELEMENT UND VERFAHREN ZU SEINER HERSTELLUNG UND VERWENDUNG**
SENSOR ELEMENT AND METHOD FOR THE PRODUCTION THEREOF AND USE THEREOF
ÉLÉMENT CAPTEUR ET SON PROCÉDÉ DE FABRICATION ET SON UTILISATION

(30) Priorität: 25.01.2010 DE 102010001197
(43) Veröffentlichungstag der Anmeldung: 05.12.2012
(73) Patentinhaber: Fraunhofer-Gesellschaft zur Förderung der angewandten Forschung e.V., 80686 München (DE)
(72) Erfinder: SCHADE, Wolfgang, 38644 Goslar (DE); KEIL, Norbert, 14089 Berlin (DE); ANGELMAHR, Martin, 69502 Hemsbach (DE); FUNKEN, Peter, 50226 Frechen (DE)
(74) Vertreter: Friese Goeden Patentanwälte PartGmbB
(86) Internationale Anmeldenummer: PCT/EP2011/050895
(87) Internationale Veröffentlichungsnummer: WO 2011/089244

(56) Entgegenhaltungen:
- EP-A2- 1 524 506
- EP-A2- 1 826 545
- WO-A2-2004/001356
- DE-A1-102006 015 159
- DE-T2- 60 221 681
- GB-A- 2 400 171
- US-A- 5 680 489

## Beschreibung

### Technisches Gebiet

Die Erfindung betrifft ein Sensorelement und ein Verfahren zur Erfassung mechanischer Zustandsgrößen, enthaltend zumindest einen Lichtwellenleiter, wobei in den Lichtwellenleiter zumindest ein Faser-Bragg-Gitter eingebracht ist, wobei das Sensorelement zumindest ein planaroptisches Filterelement aufweist, welchem aus dem Lichtwellenleiter austretendes Licht zuführbar ist.

Aus der EP 05 09 537 A2 ist ein gattungsgemäßes Sensorelement bekannt. Das Sensorelement umfasst eine optische Faser, auf welcher ein optisches Signal übertragen wird. Bei Einwirken einer mechanischen Spannung kommt es zu Verzerrungen des optischen Signals, welche mittels einer zugehörigen Messelektronik bestimmt werden können. Nachteilig ist jedoch der hohe apparative Aufwand zur Erkennung der Signalverzerrung, so dass die Anwendung dieses bekannten Sensorelementes auf wenige Anwendungsfelder beschränkt ist.

Aus der DE 602 21 681 T2 ist ein optisches Wellenleitergitter-Abfragesystem bekannt, bei welchem eine Mehrzahl identischer Faser-Bragg-Gitter in einem Lichtwellenleiter eingebracht ist. Um selektiv ein vorgebbares Gitter an einer vorgebbaren Stelle im Wellenleiter abzufragen, schlägt der Stand der Technik vor, die Signallaufzeit zu diskriminieren, so dass nur das reflektierte Licht des gewünschten Gitters im Detektor ankommt. Durch Erfassen der Intensität des reflektierten Lichtes kann auf die am Ort des Gitters herrschende mechanische Spannung und Temperatur geschlossen werden.

Die WO 2004/001356 A2 zeigt eine Vorrichtung zur Temperaturmessung in einem Bohrloch mit zwei unabhängigen Fasersensoren. Einer der Fasersensoren enthält eine Mehrzahl von Faser-Bragg-Gittern. Eine Änderung der Temperatur wird durch die sich mit der thermischen Ausdehnung ändernde Gitterkonstante erfasst. Parallel dazu verläuft ein Fasersensor ohne Faser-Bragg-Gitter, bei welchem die Temperatur durch Ramanstreuung ermittelt wird.

Die GB 2 400 171 A offenbart ein Sensorelement mit einem Lichtwellenleiter mit zumindest einem Faser-Bragg-Gitter, wobei die Intensität des rückgestreuten Lichtes in vorgebbaren Wellenlängenbereichen bestimmt wird.

Die US 5,680,489 offenbart ebenfalls ein Messsystem mit einem faseroptischen Sensor, in welchen eine Mehrzahl von Faser-Bragg-Gittern eingebracht ist. Der Stand der Technik schlägt vor, das gesamte optische Signal breitbandig in ein elektrisches Signal zu wandeln, dieses einem A/D-Wandler zuzuführen und die weitere Signalverarbeitung mittels eines digitalen Signalprozessors vorzunehmen. Sie offenbart auch die Benutzung einer planaroptischen Filterelement, die dazu eingerichtet ist, das Faser-Bragg-Gitter reflektierte Licht nachzuweisen.

Aus der DE10 2006 015 159 A1 ist bekannt, die Form eines Segels zu kontrollieren, welches mittels einer Mehrzahl von Segellatten versteift wird. Die Krümmung der Segellatten wir durch eine faseroptische Sensorik erfasst, welche eine Mehrzahl von Faser-Bragg-Gittern enthält.

Ausgehend von diesem Stand der Technik liegt der Erfindung die Aufgabe zugrunde, ein Sensorelement für die Messung mechanischer Zustandsgrößen bereitzustellen, welches mit geringerem Aufwand und damit kostengünstiger die geforderten Messwerte bereitstellen kann. Weiterhin liegt der Erfindung die Aufgabe zu Grunde, ein Sensorelement für die Messung mechanischer Zustandsgrößen bereitzustellen, welches eine höhere Genauigkeit aufweist.

### Zusammenfassung der Erfindung

Die nachfolgende Beschreibung ist so zu verstehen, dass ein genanntes Merkmal in zumindest einer Ausführungsform der Erfindung vorhanden ist. Dies schließt die Anwesenheit weiterer Merkmale nicht aus. Sofern die Ansprüche "erste" und "zweite" Merkmale definieren, so dient diese Bezeichnung der Unterscheidung zweier gleichartiger Merkmale, ohne eine Rangfolge festzulegen.

Die Erfindung betrifft ein Sensorelement zur Erfassung mechanischer Zustandsgrößen, enthaltend zumindest einen Lichtwellenleiter, wobei in den Lichtwellenleiter eine Mehrzahl von Fiber-Bragg-Gratings eingebracht ist.

Erfindungsgemäß enthält das Sensorelement weiterhin zumindest eine erste Lichtquelle und eine zweite Lichtquelle enthält, deren Licht in den zumindest einen Lichtwellenleiter einkoppelbar ist.

In einer Ausführungsform betrifft die Erfindung ein Sensorelement, bei welchem die erste Lichtquelle zumindest eine Superlumineszenzdiode enthält und/oder die zweite Lichtquelle einen Kurzpulslaser enthält, insbesondere einen gütegeschalteten Mikrochiplaser. Erfindungsgemäß weist die erste Lichtquelle eine erste Wellenlänge auf und die zweite Lichtquelle weist eine zweite Wellenlänge auf, welche von der ersten Wellenlänge verschieden ist. In einigen Ausführungsformen der Erfindung können die erste Lichtquelle und die zweite Lichtquelle gepulst arbeiten, wobei die Puls- und die Pausenzeiten so aufeinander abgestimmt sind, dass nicht beide Lichtquellen gleichzeitig Licht aussenden.

Erfindungsgemäß enthält das Sensorelement weiterhin zumindest ein planaroptisches Filterelement, mit welchem das aus dem Lichtwellenleiter austretende Licht der ersten Lichtquelle empfangbar ist. In einigen Ausführungsformen der Erfindung kann das Sensorelement eine Mehrzahl parallel angeordneter planaroptische Filterelemente enthalten, welchen mittels zumindest einem Koppler und/oder einem Multiplexer das im Lichtwellenleiter reflektierte Licht zumindest teilweise zuführbar ist. In einigen Ausführungsformen der Erfindung weisen die Akzeptanzkurven der einzelnen Kanäle der planaroptischen Filterelemente jeweils unterschiedliche Wellenlängen auf. In einigen Ausführungsformen der Erfindung können sich benachbarte Kanäle um etwa 2 nm bis etwa 10 nm unterscheiden. In einigen Ausführungsformen der Erfindung kann das planaroptische Filterelement einen Arrayed-Waveguide-Chip und/oder einen Richtkoppler und/oder ein Delayline-Interferometer und/oder ein Mach-Zehnder-Interferometer enthalten.

In einer Ausführungsform betrifft die Erfindung ein Sensorelement, bei welchem zumindest ein Fiber-Bragg-Grating durch Bestrahlung vorgebbarer Längsabschnitte des Lichtwellenleiters mit Femtosekunden-Laserpulsen erhältlich ist.

Erfindungsgemäß enthält das Sensorelement weiterhin eine Einrichtung zur Bestimmung des Intensitätsverhältnisses der Stokes- und der Antistokeslinie, welcher das aus dem Lichtwellenleiter austretende Licht der zweiten Lichtquelle zuführbar ist und eine Einrichtung zur Bestimmung der Laufzeit des Lichtes.

In einer Ausführungsform betrifft die Erfindung ein Sensorelement, bei welchem die einzelnen Fiber-Bragg-Gratings der Mehrzahl von Fiber-Bragg-Gratings jeweils eine unterschiedliche Gitterkonstante aufweisen.

In einer Ausführungsform betrifft die Erfindung ein Sensorelement, bei welchem die zwischen den Kanälen angeordneten Minima der Akzeptanzbereiche des Arrayed-Waveguide-Chips in etwa den von den Fiber-Bragg-Gratings reflektierten Wellenlängen entsprechen, wenn auf die Fiber-Bragg-Gratings keine mechanische Spannung einwirkt.

In einer Ausführungsform betrifft die Erfindung ein Sensorelement, welches weiterhin einen Multiplexer enthält, mit welchem eine Mehrzahl von Lichtwellenleitern sequentiell mit zumindest einer Lichtquelle und/oder zumindest einer Messeinrichtung verbindbar ist.

In einer Ausführungsform betrifft die Erfindung ein Sensorelement, bei welchem der Lichtwellenleiter einen Kern und einen Mantel aufweist, wobei das Material des Kernes nominell undotiert ist.

In einer Ausführungsform betrifft die Erfindung ein Verfahren zur Erfassung mechanischer Zustandsgrößen, bei welchem zumindest ein Lichtwellenleiter, in welchen eine Mehrzahl von Fiber-Bragg-Gratings eingebracht ist, entlang einer Messstrecke verläuft, wobei Licht zumindest einer vorgebbaren mittleren Wellenlänge und einer vorgebbaren spektralen Breite in den Lichtwellenleiter eingekoppelt und im Lichtwellenleiter reflektiertes Licht einer Messeinrichtung zugeführt wird. Bei dem erfindungsgemäßen Verfahren wird dem Lichtwellenleiter eine spektral breitbandige Strahlung aus einer ersten Lichtquelle und eine gepulste, spektral schmalbandige Strahlung aus einer zweiten Lichtquelle zugeführt, wobei die spektral schmalbandige Strahlung eine Wellenlänge aufweist, welche von den Wellenlängen der spektral breitbandigen Strahlung verschieden ist.

Erfindungsgemäß wird in der Messeinrichtung die Laufzeit und das Verhältnis der Stokes- und der Antistokeslinie der von der zweiten Lichtquelle ausgesandten und im Lichtwellenleiter reflektierten Strahlung bestimmt und weiterhin wird in der Messeinrichtung die Intensität der von der ersten Lichtquelle ausgesandten und im Lichtwellenleiter reflektierten Strahlung in vorgebbaren Spektralbereichen bestimmt. Die vorgebbaren Spektralbereiche können durch die Kanalbreite von zumindest einem Arrayed-Waveguide-Chip ausgewählt werden.

In einer Ausführungsform betrifft die Erfindung ein Segel, welches zumindest ein vorstehend beschriebenes Sensorelement enthält. In einer Ausführungsform betrifft die Erfindung ein Kabel, welches zumindest ein vorstehend beschriebenes Sensorelement enthält. In einer Ausführungsform kann die Erfindung eine Leine oder ein Seil betreffen, welches zumindest ein vorstehend beschriebenes Sensorelement enthält. Ein solches Sensorelement kann durch laminieren oder verkleben oder verweben in einem Segel oder einer Leine oder einem Seil eingebracht werden. In einem Kabel kann das Sensorelement beim Extrudieren oder Spritzgießen der Isolierung eingebracht werden. In einigen Ausführungsformen der Erfindung kann genau ein Sensorelement in der Mitte eines Rundkabels angeordnet sein, so dass sich ein zylindersymmetrischer Aufbau ergibt.

In einer Ausführungsform betrifft die Erfindung ein Verfahren zur Steuerung eines Lenkdrachens oder eines Segels, bei welchem die auf den Lenkdrachen oder das Segel einwirkenden Kräfte gemessen werden und eine Bedieneinrichtung wie eine Schot und/oder ein Achterhohler und/oder ein Baum und/oder eine Trimmeinrichtung zur Veränderung der Profilform und/oder der Stellung des Segels oder des Lenkdrachens automatisiert beeinflusst werden.

In einer Ausführungsform betrifft die Erfindung ein Verfahren zur Überwachung einer Kabelverbindung, bei welchem die mechanische Belastung und/oder die Temperaturverteilung entlang der Kabelverbindung mittels des Sensorelementes gemessen werden. In einigen Ausführungsformen der Erfindung kann aus den gemessenen Daten eine Lebensdauervorhersage berechnet werden.

### Kurze Beschreibung der Figuren

Die Erfindung soll nachstehend anhand von Figuren und Ausführungsbeispielen näher erläutert werden. Dabei zeigt:
- Figur 1: ein erfindungsgemäß verwendetes Sensorelement sowie ein Herstellungsverfahren, mit welchem das Sensorelement erhältlich ist.
- Figur 2: zeigt den Verlauf des Brechungsindex in einem Längsabschnitt des Sensorelementes.
- Figur 3: zeigt das Reflexions- und Transmissionsverhalten des Sensorelementes.
- Figur 4: zeigt eine schematische Darstellung einer erfindungsgemäßen Signalauslese für eine Mehrzahl von Sensorelementen.
- Figur 5: illustriert die Funktionsweise der Signalausleseeinrichtung.
- Figur 6: zeigt den Ablauf eines erfindungsgemäß vorgeschlagenen Messverfahrens.
- Figur 7: zeigt ein mit einem Lenkdrachen angetriebenes Frachtschiff als Anwendungsbeispiel des Sensorelementes.

### Ausführliche Beschreibung

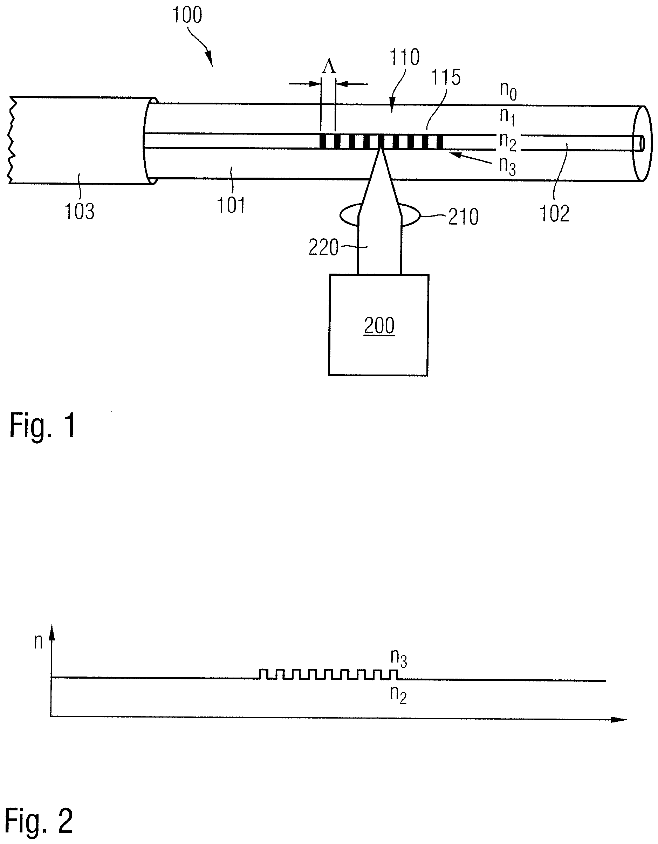

Figur 1 zeigt ein Sensorelement, welches einen Lichtwellenleiter 100 enthält. Der Lichtwellenleiter 100 umfasst einen Mantel 101 sowie einen im Wesentlichen konzentrisch im Mantel 101 angeordneten Kern 102. Zum Schutz vor Streulicht und mechanischer Beschädigung kann der Kern 101 von einer Schutzhülle 103 umgeben sein.

Die Schutzhülle 103 kann beispielsweise aus einem Polymer bestehen. Die Schutzhülle 103 kann mittels eines Extruders oder eines Spritzgussverfahrens in an sich bekannter Weise auf den Mantel 101 aufgebracht werden. Der Mantel 101 sowie der Kern 102 können ebenfalls aus einem Polymer bestehen, insbesondere einem optisch transparenten Polymer. Meist bestehen der Kern 102 und der Mantel 101 jedoch aus Glas. Das Glas kann zu einem wesentlichen Teil aus amorphem SiO₂ bestehen. Die für den Mantel 101 und den Kern 102 verwendeten Gläser können mit einem Dotierstoff verstehen werden, so dass der Mantel 101 und der Kern 102 unterschiedliche Brechungsindizes aufweisen. In Figur 1 ist dargestellt, dass der Mantel 101 einen ersten Brechungsindex n₁ aufweist und der Kern 102 einen zweiten Brechungsindex n₂. Der Übergang zwischen dem Mantel 101 und dem Kern 102 kann stufenförmig erfolgen. In anderen Ausführungsformen der Erfindung kann der Übergang ein gradierter Übergang sein, so dass der Brechungsindex n₂ allmählich in den Brechungsindex n₁ übergeht. Der Kern 102 kann einen Durchmesser von etwa 2 µm bis etwa 5 µm aufweisen.

In einigen Ausführungsformen der Erfindung ist der Kern 102 des Lichtwellenleiters 100 nominell undotiert. Dies schließt die Anwesenheit von unvermeidbaren Verunreinigungen im Material des Kerns nicht aus. Auf diese Weise kann der Lichtwellenleiter 100 auch Temperaturen von mehr als 500°C, mehr als 700°C oder mehr als 900°C ausgesetzt werden, ohne dass der Lichtwellenleiter 100 oder das im Lichtwellenleiter 100 angeordnete Fiber-Bragg-Grating 110 durch Diffusion der Dotierstoffe beschädigt wird. In diesem Fall kann der Lichtwellenleiter 100 ein handelsüblicher, zur optischen Nachrichtenübertragung verwendeter Lichtwellenleiter sein.

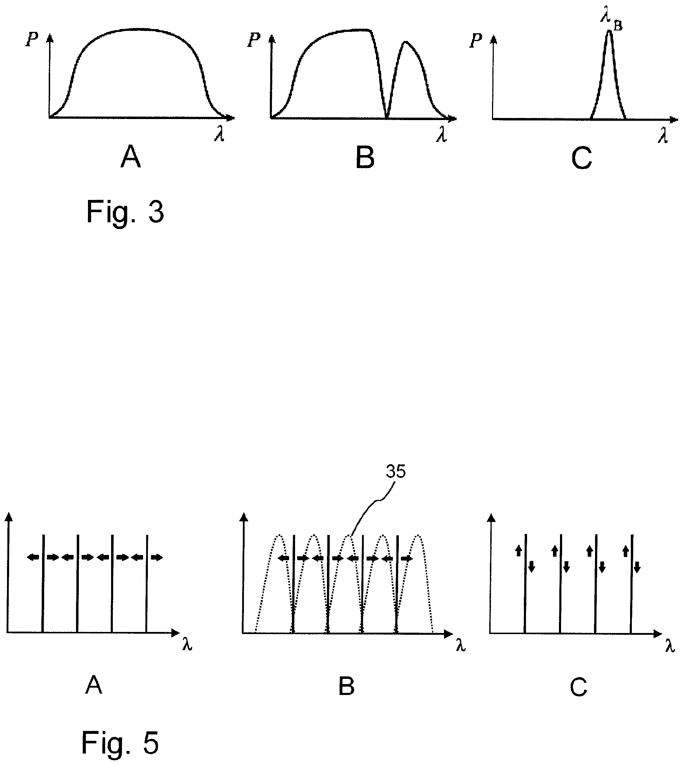

Im Lichtwellenleiter 100 wird zumindest ein Fiber-Bragg-Grating 110 eingebracht. Das Fiber-Bragg-Grating enthält eine Mehrzahl von Längsabschnitten 115 mit einem dritten Brechungsindex n₃. Der dritte Brechungsindex n₃ ist vom zweiten Brechungsindex n₂ des Kernes 102 verschieden. Das Fiber-Bragg-Grating 110 weist eine Gitterkonstante Λ auf. Die Wirkungsweise des Fiber-Bragg-Gratings 110 wird anhand der Figur 3 näher erläutert.

Zur Herstellung des Fiber-Bragg-Gratings 110 kann in einer Ausführungsform der Erfindung ein Femtosekunden-Laser 200 verwendet werden. Der Femtosekunden-Laser 200 kann Laserstrahlung 220 mit einer mittleren Wellenlänge von 800 nm aussenden. Ein einzelner Laserpuls kann eine Dauer von etwa 10 fs bis etwa 200 fs aufweisen. In einigen Ausführungsformen der Erfindung kann die Laserstrahlung 220 mittels einer fokussierenden Optik 210 auf einen Strahlfleck von etwa 0,5 µm bis etwa 2 µm fokussiert werden.

Der Mantel 201 sowie der Kern 202 und die Schutzhülle 103 des Lichtwellenleiters 100 können nominell für die Laserstrahlung 220 transparent sein. Daher gelingt es in einigen Ausführungsformen, die Laserstrahlung 220 nahezu verlustfrei durch den Mantel 101 und die Schutzhülle 103 in den Kern 102 zu fokussieren. Aufgrund der kurzen Dauer der Laserpulse 220 und der durch die Fokussierung bewirkten hohen Feldstärke treten im Material des Kernes 102 nicht-lineare Effekte auf, welche zur Veränderung des Brechungsindex auf den Wert n₃ führen. Da die Veränderung des Brechungsindex nicht auf einer Anwesenheit von Dotierstoffen in den Längsabschnitten 115 beruht, ist die Brechungsindexänderung in den Längsabschnitten 115 und damit das Vorhandensein des Fiber-Bragg-Gratings 110 auch bei erhöhten Temperaturen des Lichtwellenleiters 100 nicht durch Diffusion von Dotierstoffen beeinflusst. Das erfindungsgemäß vorgeschlagene Sensorelement zeichnet sich daher durch eine gute Langzeitstabilität und die Einsetzbarkeit bei hohen Temperaturen aus.

Figur 2 illustriert nochmals den Verlauf des Brechungsindex innerhalb des Kernes 102 des Lichtwellenleiters 100. Aufgetragen ist dabei der Brechungsindex n auf der Ordinate und die Längserstreckung des Wellenleiters 100 auf der Abszisse. Gemäß Figur 2 weist der Kern 102 des Wellenleiters 100 über seine ungestörte Länge einen Brechungsindex n₂ auf. Diejenigen Längsabschnitte, welche von der Laserstrahlung 220 beeinflusst wurden, zeigen einen höheren Brechungsindex n₃. Aufgrund der guten Fokussierbarkeit der Laserstrahlung 220 ergibt sich ein etwa kastenförmiges Brechungsindexprofil in einem Längsabschnitt 115. Eine Mehrzahl von hintereinander angeordneten Längsabschnitten 115, welche jeweils den Brechungsindex n₃ aufweisen, bildet dann ein Fiber-Bragg-Grating 110. Der Abstand einzelner Längsabschnitte 115 wird im Kontext dieser Beschreibung als Gitterkonstante *Λ* bezeichnet.

Figur 3 zeigt die Wirkungsweise eines Fiber-Bragg-Gratings 110 in einem optischen Lichtwellenleiter 100. Dargestellt ist jeweils eine optische Strahlungsintensität bzw. eine optische Leistung P auf der Ordinate und die Wellenlänge *λ* auf der Abszisse. Figur 3A zeigt die Intensitätsverteilung einer optischen Strahlung, welche von einer breitbandigen Lichtquelle erzeugbar ist. Eine solche Strahlung kann in einigen Ausführungsformen eine mittlere Wellenlänge von 1400 nm bis 1700 nm aufweisen. Die spektrale Breite kann zwischen 50 nm und 300 nm betragen. Eine solche in Figur 3A dargestellte Strahlung wird in einen Lichtwellenleiter 100 eingekoppelt, welcher mit einem Fiber-Bragg-Grating 110 versehen ist.

Figur 3B zeigt das am Ausgang des Lichtwellenleiters 100 bereitgestellte Licht. Die eingekoppelte Strahlung, wie in Figur 3A dargestellt, wird im Wesentlichen unverändert transmittiert. Lediglich ein schmaler Wellenlängenbereich mit der mittleren Wellenlänge λ_{b} und einer spektralen Breite von etwa 0,1 nm bis etwa 2 nm wird vom Lichtwellenleiter 100 nicht transmittiert. Die spektrale Breite sowie die Mittenfrequenz λ_{b} wird durch die Gitterkonstante *Λ* und die Güte des Fiber-Bragg-Gratings beeinflusst.

Figur 3C zeigt die reflektierte Strahlung, welche an dem zur Einkopplung der Strahlung verwendeten Ende des Lichtwellenleiters 100 detektiert wird. Das in Figur 3C dargestellte Spektrum ist komplementär zu dem der transmittierten Strahlung, welche in Figur 3B dargestellt ist. Dementsprechend kann am Eingang des Lichtwellenleiters 100 eine Strahlung mit der Mittenfrequenz λ_{b} nachgewiesen werden.

Sofern eine mechanische Spannung auf den Lichtwellenleiter 100 einwirkt, welche zu einer Dehnung oder Stauchung des Lichtwellenleiters führt, ändert sich auch die Gitterkonstante *Λ* des Fiber-Bragg-Gratings 110. Korrespondierend dazu ändert sich die Wellenlänge λ_{b} der reflektierten Strahlung. In gleicher Weise kann die Wellenlänge λ_{b} der reflektierten Strahlung auch durch eine thermische Ausdehnung des Lichtwellenleiters 100 beeinflusst werden. Durch Messen der Wellenlänge λ_{b} kann somit die Verformung des Wellenleiters 100 am Ort des Fiber-Bragg-Gratings 110 bestimmt werden.

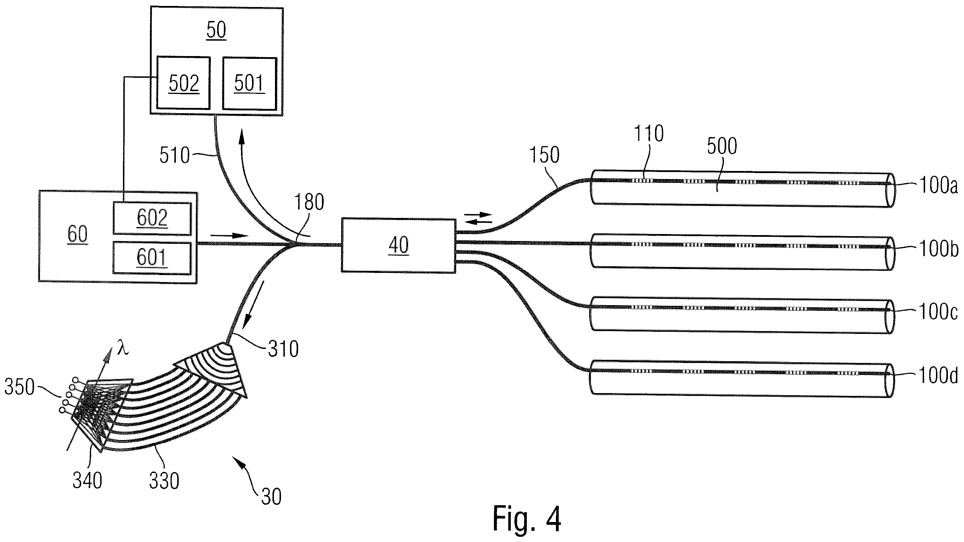

Figur 4 zeigt eine Ausführungsform einer Signalauslese für eine Mehrzahl von Sensorelementen. Beispielhaft sind in Figur 4 vier Lichtwellenleiter 100a, 100b, 100c und 100d dargestellt. Selbstverständlich kann die Anzahl der Lichtwellenleiter 100 in anderen Ausführungsformen der Erfindung auch größer oder kleiner sein. In einigen Ausführungsformen der Erfindung kann die Anzahl der Lichtwellenleiter 100 zwischen 1 und 200 oder zwischen 5 und 50 betragen.

Jeder der Lichtwellenleiter 100 ist mit einer Mehrzahl von Fiber-Bragg-Gratings 110 versehen. Im dargestellten Ausführungsbeispiel weist jeder Lichtwellenleiter 100 fünf Fiber-Bragg-Gratings 110 auf. In anderen Ausführungsformen der Erfindung kann die Anzahl der Fiber-Bragg-Gratings 110 größer oder auch kleiner sein. Meist wird sie zwischen 1 und etwa 50 liegen. Der Abstand zweier benachbarter Fiber-Bragg-Gratings 110 beträgt in einigen Ausführungsformen mehr als 10 cm. Die Längsausdehnung eines einzelnen Fiber-Bragg-Gratings kann zwischen 4 mm und etwa 10 mm liegen.

In einigen Ausführungsformen der Erfindung weisen die verschieden Fiber-Bragg-Gratings eines einzelnen Lichtwellenleiters 100 unterschiedliche Gitterkonstanten auf. Fiber-Bragg-Gratings 110 von verschiedenen Lichtwellenleitern, beispielsweise von Lichtwellenleiter 100a und 100b, können dieselbe Gitterkonstante aufweisen. Einzelne Lichtwellenleiter 100a, 100b, 100c und 100d können eine unterschiedliche Anzahl von Fiber-Bragg-Gratings 110 aufweisen und/oder die Fiber-Bragg-Gratings 110 können einen unterschiedlichen Abstand zueinander aufweisen.

Die Lichtwellenleiter 100 verlaufen jeweils entlang einer mechanischen Struktur 500, deren Verformung und/oder Belastung und/oder Temperatur bestimmt werden soll. Beispielsweise kann die mechanische Struktur 500 ein Elektrokabel umfassen. Das Elektrokabel kann beispielsweise ein Erdkabel oder ein Seekabel sein, mit welchem Energieerzeuger oder Energieverbraucher mit einem öffentlichen Stromnetz verbunden sind. Ein Energieerzeuger kann ein Kraftwerk, eine Windenergieanlage oder eine Photovoltaikanlage sein. Weiterhin kann das Kabel zum Anschluss von mobilen Energieverbrauchern an ein öffentliches Stromnetz dienen, beispielsweise dem Anschluss von Containerhebeanlagen oder Erdbewegungsmaschinen. Die Lichtwellenleiter 100 können in diesen Fällen einerseits dazu verwendet werden, Stellen mit erhöhtem elektrischem Widerstand aufgrund der lokalen Temperaturerhöhung zu erkennen und auf diese Weise einen Vorschaden zu erkennen. Weiterhin können die Lichtwellenleiter 100 dazu eingesetzt werden, eine mechanische Verformung eines Kabels durch Torsion oder Knick zu erkennen und aufgrund der nachgewiesenen Verformungszyklen eine Lebensdauervorhersage zu erstellen, so dass das Kabel rechtzeitig vor einem Ausfall ausgetauscht werden kann. Auf diese Weise können Stillstandszeiten des angeschlossenen Gerätes minimiert werden.

In einigen Ausführungsformen der Erfindung ist es möglich, einen einzelnen Lichtwellenleiter 100 mit einer Lichtquelle und einer Auswerteeinheit zu verbinden. Auf diese Weise kann eine besonders hohe Abfragefrequenz und damit eine zeitlich engmaschige Überwachung des Lichtwellenleiters erfolgen. In anderen Ausführungsformen der Erfindung können eine Mehrzahl von Lichtwellenleitern 100a, 100b, 100c und 100d mittels jeweils zugeordneter Verbindungswellenleitern 150 mit einem Multiplexer 40 verbunden werden. Die Verbindungswellenleitern 150 können einstückig mit dem Lichtwellenleiter 100 verbunden sein, welcher als Sensorelement eingesetzt wird.

Der Multiplexer 40 verbindet die Lichtwellenleiter 100a, 100b, 100c und 100d zyklisch mit zumindest einer Lichtquelle 60 und zumindest einer Auswerteeinheit 30 und/oder 50, so dass die Sensorelemente zyklisch ausgelesen und die erhaltenen Daten visualisiert oder gespeichert werden können.

Der Multiplexer 40 hat im dargestellten Ausführungsbeispiel einen Zufuhrwellenleiter, über welchen Licht aus einer Lichtquelle 60 zu dem jeweils aktiven Lichtwellenleiter 100 geleitet werden kann. Die Lichtquelle 60 kann beispielsweise ein Lichtspektrum gemäß Figur 3A bereitstellen. Hierzu kann die Lichtquelle 60 eine Superlumineszenzdiode enthalten.

Erfindungsgemäß sendet die Lichtquelle 60 einen gepulsten Laserstrahl aus, beispielsweise mit einer Wellenlänge von etwa 1 µm bis etwa 0,5 µm und einer Pulsdauer von etwa 0,5 ns bis etwa 5 ns. Hierzu kann die Lichtquelle 60 einen Kurzpulslaser enthalten, beispielsweise einen gütegeschalteten Mikrochiplaser. Erfindungsgemäß enthält die Lichtquelle 60 eine erste Lichtquelle 601, welche eine spektral breitbandige Strahlung bereitstellt. Die erste Lichtquelle 601 kann dabei eine gepulste Lichtquelle oder eine Dauerstrichquelle sein. Weiterhin enthält die Lichtquelle 60 eine zweite Lichtquelle 602, welche eine gepulste und spektral schmalbandige Strahlung aussendet. Erfindungsgemäß weist das von der zweiten Lichtquelle 602 ausgesandte Licht eine andere Wellenlänge auf, als das von der ersten Lichtquelle 601 ausgesandte Licht.

Das Licht der Lichtquelle 60 durchläuft den über den Multiplexer 40 mit der Lichtquelle verbundenen Lichtwellenleiter 100. An den unterschiedlichen Fiber-Bragg-Gratings 110 wird jeweils ein vorgegebener Spektralbereich des Lichtes der ersten Lichtquelle 601 reflektiert, wohingegen der verbleibende Anteil des Lichtes den Lichtwellenleiter 100 weiter durchläuft. Das Licht der zweiten Lichtquelle 602 wird durch Ramanstreuung entlang des Lichtwellenleiters 100 gestreut und zumindest teilweise über den Zufuhrwellenleiter 150 und den Multiplexer 40 in die Einfallsrichtung zurückgeworfen.

Das aus dem Wellenleiter 100 reflektierte bzw. gestreute Licht gelangt über den Knotenpunkt 180 in zwei Nachweiseinrichtungen 30 und 50. Wahlweise kann am Knotenpunkt 180 ein Interferenzkoppler vorgesehen sein, um das eintreffende Licht auf zwei Lichtwellenleiter 310 und 510 aufzuteilen. In anderen Ausführungsformen kann am Knotenpunkt 180 ein einfaches Spektrometer vorgesehen sein, welches Licht eines ersten Wellenlängenbereichs in den Wellenleiter 310 und Licht eines zweiten Wellenlängenbereichs in den Wellenleiter 510 einkoppelt.

Das von der ersten Lichtquelle 601 ausgesandte und von den Fiber-Bragg-Gratings 110 reflektierte Licht kann mittels eines planaroptischen Filterelementes nachgewiesen werden.

In einigen Ausführungsformen der Erfindung kann das planaroptische Filterelement aus einem Material hergestellt sein, welches in etwa denselben Brechungsindex aufweist wie der Wellenleiter 100. Dadurch kann die Fehlanpassung der Signale vermindert und die Messgenauigkeit des Sensorelementes gesteigert werden.

In der Ausführungsform gemäß Figur 4 wird das planaroptische Filterelement durch zumindest einen Arrayed-Waveguide-Chip 30 gebildet. Der Arrayed-Waveguide-Chip weist einen Zufuhrwellenleiter 310 auf, durch welchen die reflektierten Anteile des Lichtes einem Koppler 320 zugeführt werden. Im Koppler 320 kommt es zur freien Ausbreitung der zugeführten Signale. Am gegenüberliegenden Ende des Kopplers 320 setzt eine Mehrzahl von Lichtwellenleitern 330 an, welche jeweils einen Teil des optischen Signals aufnehmen. Aufgrund der unterschiedlichen Länge der Lichtwellenleiter 330 kommt es am Eingang des Interferenzkopplers 340 zu Phasenverschiebungen zwischen den Eingangssignalen.

Im Interferenzkoppler 340 kommen die Signale schließlich zur Interferenz. Im Ergebnis wird ein Wellenlängenunterschied der im Zufuhrwellenleiter 310 laufenden Signale in einen Ortsunterschied am Ausgang des Kopplers 340 abgebildet.

Am Ausgang des Kopplers 340 steht ein Photodiodenarray 350 zur Verfügung, welches eine ortsaufgelöste Messung des optischen Signals erlaubt. Aufgrund des im Photodiodenarray 350 bestimmten Ortes kann die Wellenlänge des über den Zufuhrwellenleiter 310 empfangenen Signals und aus der Wellenlänge das jeweilige Fiber-Bragg-Grating 110 bestimmt werden, an welchem das Signal reflektiert wurde. Sofern das Fiber-Bragg-Grating 110 aufgrund der mechanischen Spannung eine Längenänderung erfahren hat, kann die Längenänderung und damit indirekt die einwirkende Kraft aufgrund der gemessenen Wellenlänge bestimmt werden.

Das Arrayed-Waveguide-Grating 30 kann in einigen Ausführungsformen als Chip hergestellt werden, bei welchem die optischen Elemente 320, 330 und 340 mittels konventioneller Lithographietechniken in einem Polymer hergestellt wurden und das Photodiodenarray 350 als integrierte Indiumphosphiddiodenzeile ausgeführt ist. Die optischen Bauteile und die Diodenzeile können dann auf einem Substrat oder zumindest in einem Schaltungsträger bzw. einem Gehäuse integriert werden. Auf diese Weise ist ein kostengünstiger und zuverlässiger Aufbau der Signalauslese möglich.

Die Funktionsweise des Arrayed-Waveguide-Chips 30 wird nochmals anhand von Figur 5 näher erläutert. Dabei zeigen die Figuren wieder eine optische Leistung bzw. eine Intensität auf der Ordinate und die Wellenlänge auf der Abszisse. Figur 5A zeigt ein Linienspektrum aus fünf Linien. Jede der Linien weist eine unterschiedliche Mittenfrequenz λ_{b} auf, wie vorstehend im Zusammenhang mit Figur 3C erläutert. Aufgrund des anderen Maßstabes der Figur 5 gegenüber der Figur 3 ist die spektrale Breite in Figur 5A anders als in Figur 3C nicht erkennbar. Jede der in Figur 5A dargestellten Linien wurde von einem Fiber-Bragg-Grating 110 mit jeweils unterschiedlicher Gitterkonstanten reflektiert. Bei einer Längenänderung des jeweiligen Längsabschnittes des Lichtwellenleiters 100 verschiebt sich die Wellenlänge des zugeordneten Reflexionsmaximums entsprechend der Änderung der Gitterkonstanten. Diese Verschiebung in Abhängigkeit der äußeren Messgröße ist in jeder Linie mit einem Doppelpfeil angedeutet.

Figur 5B zeigt wiederum das Linienspektrum aus Figur 5A. Zusätzlich zeigt Figur 5B die Akzeptanzbereiche 35 eines Photodiodenarrays 350 eines Arrayed-Waveguide-Chips 30. In Figur 5B sind fünf Akzeptanzbereiche 35 entsprechend einem Diodenarray 350 mit fünf Photodioden dargestellt. In anderen Ausführungsformen der Erfindung kann das Arrayed-Waveguide-Grating 30 ein Diodenarray 350 mit einer größeren oder einer kleineren Anzahl von Dioden aufweisen. Die Gitterkonstanten der Fiber-Bragg-Gratings 110 sind so gewählt, dass die Reflexionsmaxima eines ungestörten Lichtwellenleiters 100 bzw. eines ungestörten Fiber-Bragg-Gratings 110 zwischen den Akzeptanzkurven 35 der jeweiligen Photodioden liegen. Auf diese Weise kann an einem ungestörten Lichtwellenleiter 100 kein oder nur ein geringes Signal im Diodenarray 350 nachgewiesen werden.

Wenn die Gitterkonstante eines Fiber-Bragg-Gratings durch äußere Einflüsse geändert wird, verschiebt sich die Lage der entsprechenden Linie im Spektrum gemäß Figur 5B. Auf diese Weise kann die Linie in den Akzeptanzbereich 35 einer Diode des Diodenarrays 350 eintreten. Dies führt zur Ausgabe eines entsprechenden Signals der jeweiligen Diode. Wie in Figur 5C dargestellt, führt diese Form der Signalauslese zu einer variablen Amplitude am Ausgang des Diodenarrays 350. Auf diese Weise wird die vom Sensorelement erzeugte Wellenlängenmodulation in eine Amplitudenmodulation gewandelt. Das in Figur 5C dargestellte Signal kann dann in an sich bekannter Weise mit einer analogen und/oder digitalen Signalverarbeitung weiterverarbeitet, visualisiert und gespeichert werden.

Selbstverständlich kann in einer anderen Ausführungsform der Erfindung die Gitterkonstante der Fiber-Bragg-Gratings auch so gewählt werden, dass die von einem ungestörten Lichtwellenleiter reflektierten Signale im Maximum der Akzeptanzbereiche 35 liegen. In diesem Fall erzeugt eine Änderung der Gitterkonstanten eine Schwächung des Signals der jeweils zugeordneten Diode. In anderen Ausführungsformen der Erfindung können andere Filterelemente verwendet werden, welche eine Kante in ihrer Akzeptanzkurve aufweisen.

Sofern die Anzahl der Kanäle eines einzelnen Arrayed-Waveguide-Gratings 30 zur Auslese aller Fiber-Bragg-Gratings 110 eines einzelnen Lichtwellenleiters 100 nicht ausreicht, können die Signale zusätzlich durch deren Laufzeit diskriminiert werden. In anderen Ausführungsformen der Erfindung kann im Zuführungswellenleiter 310 ein Koppler angeordnet sein, welcher die eintreffenden Signale auf eine Mehrzahl von Arrayed-Waveguide-Gratings 30 aufteilt, welche jeweils unterschiedliche Akzeptanzbereiche 35 abdecken.

Das von der zweiten Lichtquelle 602 ausgesandte und durch Ramanstreuung zurückgeworfene Licht wird am Knotenpunkt 180 in die Messeinrichtung 50 ausgekoppelt. Die Messeinrichtung 50 enthält eine Einrichtung 501, welche sowohl die Intensität der Stokes-Linie als auch die Intensität der Antistokes-Linie bestimmt. Aus den gemessenen Amplituden kann das Verhältnis der Intensitäten bestimmt werden. Daraus lässt sich die Temperatur mit einer Genauigkeit von etwa 1 K bestimmen.

Weiterhin kann die Einrichtung 50 eine Einrichtung 502 zur Messung der Signallaufzeit enthalten. Hierzu erhält die Einrichtung 502 einen Trigger von der Lichtquelle 602, welcher den Zeitpunkt des Aussendens eines Lichtpulses markiert, und bestimmt die Zeitdifferenz bis zum Eintreffen der rückgestreuten Strahlung. Aus der Signallaufzeit kann in der Einrichtung 502 die Entfernung des Streupunktes von der Lichtquelle 602 bestimmt werden. In einigen Ausführungsbeispielen der Erfindung kann die Genauigkeit der Ortsbestimmung etwa 5 cm bis etwa 50 cm betragen. Sofern eine optionale Einrichtung 502 vorhanden ist, kann die Einrichtung 50 die Temperatur somit ortsaufgelöst entlang der mechanischen Struktur 500 bestimmen. Sofern eine solche ortsabhängige Temperaturmessung nicht vorhanden oder nicht erforderlich ist, kann die Einrichtung 501 zur Messung der durchschnittlichen Temperatur des Lichtwellenleiters 100 verwendet werden. Die Temperaturmessungen aus der Einrichtung 50 können zur Korrektur der im Arrayed-Waveguide-Grating 30 gemessenen Werte verwendet werden. Auf diese Weise kann eine thermische Längenänderung des Lichtwellenleiters 100 von einer Längenänderung aufgrund mechanischer Beanspruchung unterschieden werden. Die Genauigkeit der Belastungsmessung wird auf diese Weise erhöht.

In einigen Ausführungsformen kann zusätzlich mit der Einrichtung 502 der zeitliche Verlauf der Intensität der von der zweiten Lichtquelle 602 ausgesandten Strahlung vermessen werden. Mit den gemessenen Werten für den zeitlichen Verlauf der Intensität kann die Ortsauflösung der Temperaturmessung weiter verbessert werden.

In einigen Ausführungsformen können der Multiplexer 40 und/oder die Messeinrichtung 50 und/oder das Arrayed-Waveguide-Grating 30 und/oder die Lichtquelle 60 mittels Faserkopplung verbunden werden. Auf diese Weise wird der Aufwand der Herstellung verringert und die Zuverlässigkeit der Anordnung erhöht.

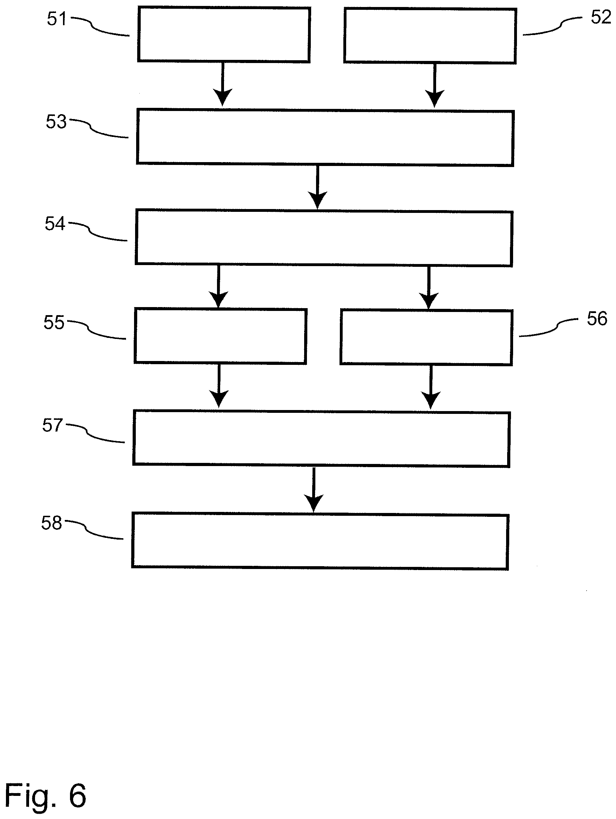

Das erfindungsgemäße Messverfahren wird nachfolgend anhand von Figur 6 näher erläutert. In Verfahrensschritt 51 wird aus der ersten Lichtquelle 601 Strahlung in den Wellenleiter 100 eingekoppelt. Die Lichtemission aus der ersten Lichtquelle 601 kann dabei gepulst oder kontinuierlich erfolgen. Das Licht ist dazu vorgesehen, an den Fiber-Bragg-Gratings 110 reflektiert zu werden.

Zeitgleich wird im Verfahrensschritt 52 aus der zweiten Lichtquelle 602 gepulste Strahlung mit einer Pulsdauer von etwa 0,5 ns bis etwa 5 ns und einer Repetitionsrate zwischen 10 kHz und 1 MHz fortlaufend abgegeben. In anderen Ausführungsformen des Verfahrens können die Verfahrensschritte 51 und 52 auch sequenziell ablaufen.

Die eingekoppelte elektromagnetische Strahlung propagiert entlang des Lichtwellenleiters 100. Im Verfahrensschritt 53 wird die im Verfahrensschritt 51 eingekoppelte elektromagnetische Strahlung zumindest teilweise an zumindest einem Fiber-Bragg-Grating 110 reflektiert. Unabhängig davon wird im Verfahrensschritt 53 ebenfalls die im Verfahrensschritt 52 eingekoppelte elektromagnetische Strahlung durch Ramanstreuung gestreut und gelangt dabei zumindest teilweise zurück an das zur Einkopplung der Strahlung verwendete Ende des Wellenleiters 100.

Im Verfahrensschritt 54 gelangt das rückgestreute Licht an den Knotenpunkt 180 und wird dort auf die beiden Empfangseinrichtungen 30 und 50 aufgeteilt. Im Verfahrensschritt 55 erfolgt dann die Signalverarbeitung des an den Fiber-Bragg-Gratings 110 reflektierten Lichtes mittels des Arrayed-Waveguide-Chips 30. Am Ende des Verfahrensschrittes 55 steht ein elektrisches Signal zur Verfügung, welches im nachfolgenden Schritt 57 weiterverarbeitet wird.

Parallel oder sequenziell zum Verfahrensschritt 55 wird in Schritt 56 das Raman-gestreute Lichtsignal in der Einrichtung 50 verarbeitet. Die Einrichtung 50 kann dabei eine Laufzeitmessung durchführen und/oder über das Verhältnis der Lichtintensität der Stokes- und der Antistokes-Linie die Temperatur am Ort der Streuung ermitteln.

Im nachfolgenden Verfahrensschritt 57 können die elektrischen Signale mittels einer analogen oder digitalen Elektronik weiterverarbeitet werden. Beispielsweise können die Signale einer Verstärkung oder einer A/D-Wandlung unterzogen werden. Wahlweise können die erhaltenen Daten visualisiert oder in einer Datenbank gespeichert werden. Im Verfahrensschritt 57 kann ebenfalls vorgesehen sein, die im Verfahrensschritt 55 erhaltenen Daten mit dem Temperaturwert aus Verfahrensschritt 56 zu korrigieren.

An den Verfahrensschritt 57 kann sich ein optionaler Schritt 58 anschließen. Im Verfahrensschritt 58 kann aus den erhaltenen Messwerten durch Vergleich mit vorgegebenen Sollwerten ein Steuersignal und/oder ein Regelsignal erzeugt werden, welches die Messgröße beeinflusst. Im Anschluss daran kann das Verfahren wieder von vorne starten, um die verbleibenden Abweichungen bzw. den Einfluss des Regeleingriffes auf die Messgröße zu kontrollieren.

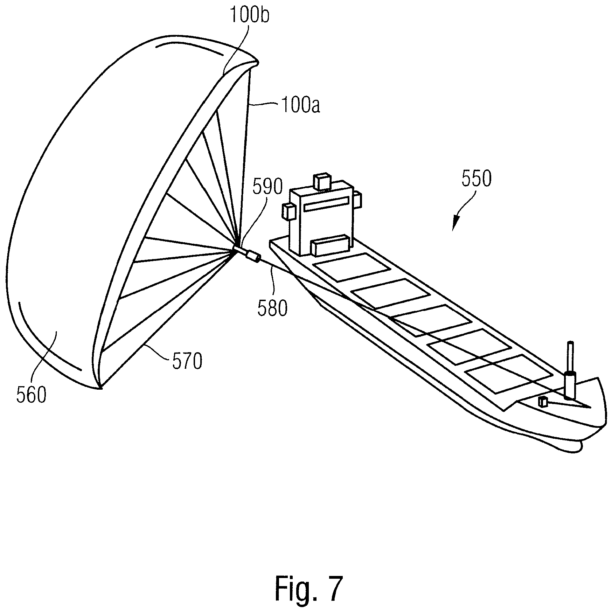

Figur 7 zeigt ein weiteres Anwendungsbeispiel des erfindungsgemäßen Sensorelementes. In Figur 7 ist ein Frachtschiff 550 dargestellt. Das Frachtschiff wird mittels eines Dieselmotors und eines Schraubenantriebs in an sich bekannter Weise fortbewegt. Zusätzlich weist das Frachtschiff 550 am Bug eine Befestigungsvorrichtung für einen Lenkdrachen 560 auf. Mit dem Lenkdrachen 560 kann zusätzliche Antriebsleistung für das Frachtschiff 550 erzeugt werden, sofern dieses in einem Fahrtgebiet mit achterlichen Winden unterwegs ist. Auf diese Weise kann die Windenergie zur Kraftstoffersparnis genutzt werden.

Der Lenkdrachen 560 ist mittels eines Verbindungsseiles 580 am Bug des Frachtschiffes 550 angeschlagen. Am Ende des Verbindungsseiles 580 befindet sich eine Steuereinrichtung 590. Von der Steuereinrichtung 590 aus kann das Profil des Lenkdrachens 560 durch Fieren oder Dichtholen von Steuerleinen 570 beeinflusst werden. Die entsprechenden Steuerbefehle können entweder von einem im Frachtschiff 550 vorhandenen Steuerrechner erzeugt oder manuell vom Bedienpersonal auf der Brücke des Schiffes gegeben werden.

Erfindungsgemäß wird nun vorgeschlagen, die Steuerseile 570 zumindest teilweise mit einem Sensorelement 100a auszustatten und/oder in die Fläche des Lenkdrachens 560 durch Einweben oder Laminieren zumindest ein Sensorelement 100b einzubringen und/oder die Verbindungsleine 580 mit einem erfindungsgemäßen Sensorelement auszustatten. Auf diese Weise kann mit dem erfindungsgemäßen Sensorelement die in den Steuerseilen 570 oder der Verbindungsleine 580 herrschenden Kräfte gemessen werden. Mit den in der Fläche des Lenkdrachens 560 eingebrachten Sensorelementen 100b kann das Profil des Lenkdrachens 560 unmittelbar bestimmt werden, welches die bereitgestellte Antriebsleistung beeinflusst.

Um die Antriebsleistung und damit die Geschwindigkeit und/oder die Kraftstoffersparnis des Frachtschiffes 550 zu optimieren, kann nun mittels einer Computersimulation ein optimales Profil für den Lenkdrachen 560 in einer Strömungssimulation berechnet werden. Die Simulation kann dabei die Wellenhöhe, die Windgeschwindigkeit, die herrschende Windrichtung und/oder die aktuelle Fahrtgeschwindigkeit als Eingangsgrößen berücksichtigen. Nachfolgend kann durch Verformung der Sensorelemente 100b das Ist-Profil des Lenkdrachens 560 mit großer Genauigkeit bestimmt werden. Durch Trimmen des Lenkdrachens 560 durch Fieren oder Dichtholen der Steuerleine 570 kann das Ist-Profil des Lenkdrachens 560 an das geforderte Soll-Profil angepasst werden. Die in dem Verbindungsseil 580 und/oder in den Steuerseilen 570 angeordneten Sensorelemente 100a können dabei vor unzulässigen Kraftspitzen warnen und ermöglichen, bei zunehmendem Wind den Lenkdrachen 560 rechtzeitig zu bergen.

Sofern der Lenkdrachen 560 aus einem gewebten textilen Material besteht, können die Sensorelemente 100b als Kettfaden und/oder als Schussfaden in vorgebbarem Abstand in die Fläche des Lenkdrachens 560 eingewebt werden. Sofern das Gewebe des Lenkdrachens 560 eine Verstärkung durch ein aushärtendes Kunstharz aufweist, können die Sensorelemente 100b über deren gesamte Länge auf ein textiles Flächengebilde aufgeklebt bzw. in die Harzschicht eingebettet werden. In anderen Ausführungsformen der Erfindung kann das Flächengebilde des Lenkdrachens 560 aus zwei Folienlagen bestehen. Die Folienlagen können eine biaxial orientierte Polyesterfolie enthalten. In anderen Ausführungsformen können die Folienlagen aus Polyethylenterephthalat bestehen, welches einem Reckverfahren unterworfen wurde. Die Folienlagen können vollflächig miteinander laminiert sein. Zwischen den Folienlagen können lastaufnehmende Fasern angeordnet sein, beispielsweise Kohlefasern, Aramidfasern oder Pentex-Fasern. Zwischen den lastaufnehmenden Fasern kann zumindest eines der vorgeschlagenen Sensorelemente in das Laminat eingebracht sein.

In gleicher Art wie vorstehend anhand der Figur 7 für einen Lenkdrachen beschrieben, können auch andere Segelformen mit dem Sensorelement ausgestattet werden, um deren Profil durch Trimmeinrichtungen so zu beeinflussen, dass ein vorgegebenes ideales Profil mit möglichst geringen Abweichungen erreicht wird. Zu diesen konventionellen Segeln gehören beispielsweise Vorsegel wie eine Fock, ein Klüver oder eine Genua, ein Spinnaker, ein Gennaker, ein Großsegel oder ein Besansegel.

Durch Einbringen oder Aufbringen des vorgeschlagenen Sensorelementes auf bzw. in Masten und Spieren kann auch deren Biegelinie präzise kontrolliert werden. Dies erlaubt das präzise Einstellen von Mastcontrollern, Wanten oder Backstagen.

In einigen Ausführungsformen der Erfindung kann das vorgeschlagene Sensorelement in Bauteile aus faserverstärkten Kunststoffen eingebracht werden. Solche Bauteile können den Rumpf, das Schwert, das Ruderblatt, den Kiel oder weitere, hier nicht explizit genannte Teile eines Bootes umfassen. In anderen Ausführungsformen können die Bauteile Flugzeugteile oder Rotorlätter von Windenergieanlagen sein. Der faserverstärkte Kunststoff kann neben lastaufnehmenden Fasern ein ausgehärtetes Harz oder ein Thermoplast enthalten. Das Harz kann ein Polyester oder ein Epoxidharz sein. Die lastaufnehmenden Fasern können Glasfasern und/oder Kohlefasern und/oder Aramidfasern enthalten oder daraus bestehen. Der zumindest eine Sensor kann als Glasfaser unmittelbar zusammen mit den lastaufnehmenden Fasern in das Bauteil einlaminiert oder durch Kleben oder Klemmen auf dem Bauteil befestigt werden.

Die mit dem Sensorelement erhaltenen Messwerte zur Temperatur und/oder einwirkender Kraft und/oder Verformung können in der Entwicklung dazu verwendet werden, die Struktur des Bauteils aus faserverstärktem Kunststoff zu verbessern, so dass ein Bauteil mit geringerem Gewicht und/oder größerer Belastbarkeit erhalten wird. In anderen Ausführungsformen können die Messwerte zum Structural Health Monitoring verwendet werden, um kontinuierlich Anhaltspunkte über die Funktionsfähigkeit des Bauteiles zu erhalten. So können Schädigungen, zum Beispiel Risse oder Verformungen, frühzeitig erkannt werden, um Gegenmaßnahmen einzuleiten, ehe es zum Totalausfall kommt. Andrerseits kann der präventive Austausch sicherheitskritischer Strukturen vermieden und damit Ausfallzeiten und Wartungsaufwand verringert werden.

Selbstverständlich ist die Erfindung nicht auf die in den Figuren dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Merkmale definieren, so dient diese Bezeichnung der Unterscheidung zweier gleichartiger Merkmale, ohne eine Rangfolge festzulegen.

## Patentansprüche

1. Sensorelement zur Erfassung mechanischer Zustandsgrößen, enthaltend
zumindest einen Lichtwellenleiter (100), wobei in den Lichtwellenleiter (100) zumindest ein Faser-Bragg-Gitter (110) eingebracht ist, und
eine Lichtquelle (60), mit welcher Licht in den Lichtwellenleiter (100) einkoppelbar ist, und
zumindest ein planaroptisches Filterelement (30), welchem aus dem Lichtwellenleiter (100) austretendes Licht zuführbar ist,
wobei
die Lichtquelle (60) eine erste Lichtquelle (601) enthält, welche dazu eingerichtet ist, spektral breitbandige Strahlung bereitzustellen und die Lichtquelle (60) eine zweite Lichtquelle (602) enthält, welche dazu eingerichtet ist, gepulste und spektral schmalbandige Strahlung bereitzustellen, wobei
die erste Lichtquelle (601) dazu eingerichtet ist, Licht einer ersten Wellenlänge auszusenden und die zweite Lichtquelle (602) dazu eingerichtet ist, Licht einer zweiten Wellenlänge auszusenden, welche von der ersten Wellenlänge verschieden ist, und
das Sensorelement weiterhin zumindest eine Messeinrichtung (50) aufweist, welche dazu eingerichtet ist, das aus dem Lichtwellenleiter (100) austretende Licht der zweite Lichtquelle (602) zu empfangen und ein Intensitätsverhältnis einer Stokes- und einer Antistokeslinie sowie eine Laufzeit eines optischen Signals zu messen und aus dem Intensitätsverhältnis eine Temperatur zu bestimmen, wobei
das zumindest eine planaroptische Filterelement (30) dazu eingerichtet ist, das von der ersten Lichtquelle (601) ausgesandte und an zumindest einem Faser-Bragg-Gitter (110) reflektierte Licht nachzuweisen und
die Lichtquelle (60), der zumindest einen Lichtwellenleiter (100), die zumindest eine Messeinrichtung (50) und das zumindest eine Filterelement (30) über einen Knotenpunkt (180) verbunden sind.

2. Sensorelement nach Anspruch 1, **dadurch gekennzeichnet, dass** das planaroptische Filterelement (30) einen Brechungsindex aufweist, welcher in etwa dem Brechungsindex (n₂) des Lichtwellenleiters (100) entspricht.

3. Sensorelement nach einem der Ansprüche 1 oder 2, **dadurch gekennzeichnet, dass** der Knotenpunkt (180) einen Interferenzkoppler oder ein Spektrometer enthält.

4. Sensorelement nach einem der Ansprüche 1 bis 3, **dadurch gekennzeichnet, dass** die erste Lichtquelle (601) zumindest eine Superlumineszenzdiode enthält und/oder die zweite Lichtquelle (602) einen Kurzpulslaser enthält.

5. Sensorelement nach einem der Ansprüche 1 bis 4, **dadurch gekennzeichnet, dass** das zumindest eine planaroptische Filterelement (30) ein Arrayed-Waveguide-Grating (30) und/oder ein Mach-Zehnder-Interferometer und/oder ein Delayline-Interferometer und/oder einen Richtkoppler enthält.

6. Sensorelement nach einem der Ansprüche 1 bis 5, **dadurch gekennzeichnet, dass** die einzelnen Faser-Bragg-Gitter (110) der Mehrzahl von Faser-Bragg-Gittern (110) jeweils eine unterschiedliche Gitterkonstante (*Λ*) aufweisen.

7. Sensorelement nach einem der Ansprüche 1 bis 6, **dadurch gekennzeichnet, dass** die an einem ungestörten Faser-Bragg-Gitter (110) reflektierten Wellenlängen in etwa zwischen den Akzeptanzkurven (35) der jeweiligen Kanäle des planaroptischen Filterelementes (30) liegen.

8. Sensorelement nach einem der Ansprüche 1 bis 7, weiterhin enthaltend einen Multiplexer (40), mit welchem eine Mehrzahl von Lichtwellenleitern (100a, 100b, 100c, 100d) sequentiell mit zumindest einer Lichtquelle (60) und/oder zumindest einem planaroptischen Filterelement (30) verbindbar ist.

9. Verfahren zur Erfassung mechanischer Zustandsgrößen, bei welchem
zumindest ein Lichtwellenleiter (100), in welchen eine Mehrzahl von Faser-Bragg-Gittern (110) eingebracht ist, entlang einer Messstrecke verläuft, wobei
Licht aus einer ersten Lichtquelle (601) mit zumindest einer vorgebbaren mittleren ersten Wellenlänge und einer vorgebbaren spektralen Breite in den Lichtwellenleiter (100) eingekoppelt wird, und
zumindest ein planaroptisches Filterelement (30) dazu eingerichtet ist, das von der ersten Lichtquelle (601) ausgesandte und an zumindest einem Faser-Bragg-Gitter (110) reflektierte Licht nachzuweisen,
wobei
weiterhin gepulstes und spektral schmalbandiges Licht einer zweiten Wellenlänge, welche von der ersten Wellenlänge verschieden ist, aus einer zweiten Lichtquelle (602) in den Lichtwellenleiter (100) eingekoppelt wird, und
im Lichtwellenleiter (100) gestreutes Licht der zweiten Wellenlänge zumindest einer Messeinrichtung (50) zugeführt wird, welche ein Intensitätsverhältnis einer Stokes- und einer Antistokeslinie sowie eine Laufzeit eines optischen Signals misst und aus dem Intensitätsverhältnis eine Temperatur bestimmt, wobei
die Lichtquelle (60), der zumindest eine Lichtwellenleiter (100), die zumindest eine Messeinrichtung (50) und das zumindest eine Filterelement (30) über einen Knotenpunkt (180) verbunden sind.

10. Verfahren nach Anspruch 9, **dadurch gekennzeichnet, dass** der Knotenpunkt (180) einen Interferenzkoppler oder ein Spektrometer enthält.

11. Verfahren nach einem der Ansprüche 9 bis 10, **dadurch gekennzeichnet, dass** die erste Lichtquelle (601) und die zweite Lichtquelle (602) gepulst arbeiten, wobei die Puls- und die Pausenzeiten so aufeinander abgestimmt sind, dass nicht beide Lichtquellen (601, 602) gleichzeitig Licht aussenden.

12. Mechanische Struktur (500), insbesondere Segel oder Bedienelement für ein Segel oder Kabel, enthaltend ein Sensorelement nach einem der Ansprüche 1 bis 8.

## Claims

1. Sensor element for detecting mechanical state variables, containing
at least one optical waveguide (100), at least one fiber Bragg grating (110) being introduced into the optical waveguide (100), and
a light source (60) capable of coupling light into the optical waveguide (100), and
at least one planar-optical filter element (30) to which light exiting the optical waveguide (100) can be supplied,
wherein
the light source (60) contains a first light source (601) designed to provide spectrally broad-band radiation and the light source (60) contains a second light source (602) designed to provide pulsed and spectrally narrow-band radiation,
the first light source (601) being designed to emit light of a first wavelength and the second light source (602) being designed to emit light of a second wavelength which differs from the first wavelength, and
the sensor element further includes at least one measurement device (50) designed to receive the light of the second light source (602) exiting the optical waveguide (100) and to measure an intensity ratio of a Stokes line and an anti-Stokes line as well as a propagation time of an optical signal and to determine a temperature from the intensity ratio,
the at least one planar-optical filter element (30) being designed to verify the light emitted from the first light source (601) and reflected by at least one fiber Bragg grating (110), and
the light source (60), the at least one optical waveguide (100), the at least one measurement device (50) and the at least one filter element (30) are connected via a nodal point (180).

2. Sensor element according to claim 1, **characterized in that** the planar-optical filter element (30) has a refractive index which corresponds approximately to the refractive index (n₂) of the optical waveguide (100).

3. Sensor element according to any of claims 1 or 2, **characterized in that** the nodal point (180) contains an interference coupler or a spectrometer.

4. Sensor element according to any of claims 1 to 3, **characterized in that** the first light source (601) contains at least one superluminescent diode and/or the second light source (602) contains a short-pulse laser.

5. Sensor element according to any of claims 1 to 4, **characterized in that** the at least one planar-optical filter element (30) contains an arrayed waveguide grating (30) and/or a Mach-Zehnder interferometer and/or a delay-line interferometer and/or a directional coupler.

6. Sensor element according to any of claims 1 to 5, **characterized in that** the individual fiber Bragg gratings (110) of the plurality of fiber Bragg gratings (110) all have a different grating constant (A).

7. Sensor element according to any of claims 1 to 6, **characterized in that** the wavelengths reflected by an undisturbed fiber Bragg grating (110) are approximately between the acceptance curves (35) of the respective channels of the planar-optical filter element (30).

8. Sensor element according to any of claims 1 to 7, further containing a multiplexer (40) by which a plurality of optical waveguides (100a, 100b, 100c, 100d) can be sequentially connected to at least one light source (60) and/or at least one planar-optical filter element (30).

9. Method for detecting mechanical state variables, in which
at least one optical waveguide (100), into which a plurality of fiber Bragg gratings (110) is introduced, runs along a measuring section,
light from a first light source (601) being coupled into the optical waveguide (100) with at least one predeterminable average first wavelength and a predeterminable spectral width, and
at least one planar-optical filter element (30) being designed to verify the light emitted from the first light source (601) and reflected by at least one fiber Bragg grating (110),
wherein
furthermore pulsed and spectrally narrow-band light of a second wavelength which differs from the first wavelength is coupled into the optical waveguide (100) from a second light source (602), and
light of the second wavelength that is scattered in the optical waveguide (100) is supplied to at least one measurement device (50) which measures an intensity ratio of a Stokes line and an anti-Stokes line as well as a propagation time of an optical signal and determines a temperature from the intensity ratio,
the light source (60), the at least one optical waveguide (100), the at least one measurement device (50) and the at least one filter element (30) being connected via a nodal point (180).

10. Method according to claim 9, **characterized in that** the nodal point (180) contains an interference coupler or a spectrometer.

11. Method according to any of claims 9 to 10, **characterized in that** the first light source (601) and the second light source (602) operate in a pulsed manner, the pulse and pause times being coordinated such that both light sources (601, 602) do not emit light at the same time.

12. Mechanical structure (500), in particular sail or control element for a sail or cable, containing a sensor element according to any of claims 1 to 8.

## Revendications

1. Elément capteur pour détecter des grandeurs d'état mécaniques, comprenant
au moins un guide d'ondes lumineuses (100), au moins un réseau de Bragg à fibres (110) étant inséré dans le guide d'ondes lumineuses (100), et
une source de lumière (60) permettant d'injecter de la lumière dans le guide d'ondes lumineuses (100), et
au moins un élément de filtre optique planaire (30), auquel la lumière sortant du guide d'ondes lumineuses (100) peut être amenée,
dans lequel
la source de lumière (60) comprend une première source de lumière (601) qui est conçue pour fournir un rayonnement à bande spectrale large, et la source de lumière (60) comprend une seconde source de lumière (602) qui est conçue pour fournir un rayonnement pulsé à bande spectrale étroite,
la première source de lumière (601) est conçue pour émettre une lumière d'une première longueur d'onde, et la seconde source de lumière (602) est conçue pour émettre une lumière d'une seconde longueur d'onde qui est différente de la première longueur d'onde, et
l'élément capteur comprend en outre au moins un dispositif de mesure (50) qui est conçu pour recevoir la lumière de la seconde source de lumière (602) sortant du guide d'ondes lumineuses (100), pour mesurer un rapport d'intensité d'une ligne de Stokes et d'une ligne anti-Stokes et un temps de parcours d'un signal optique, et pour déterminer une température à partir dudit rapport d'intensité,
ledit au moins un élément de filtre optique planaire (30) est conçu pour détecter la lumière émise par la première source de lumière (601) et réfléchie par au moins un réseau de Bragg à fibres (110), et
la source de lumière (60), ledit au moins un guide d'ondes lumineuses (100), ledit au moins un dispositif de mesure (50) et ledit au moins un élément de filtre (30) sont reliés par un point nodal (180).

2. Elément capteur selon la revendication 1, **caractérisé en ce que** l'élément de filtre optique planaire (30) présente un indice de réfraction qui correspond approximativement à l'indice de réfraction (n₂) du guide d'ondes lumineuses (100).

3. Elément capteur selon l'une des revendications 1 ou 2, **caractérisé en ce que** le point nodal (180) comprend un coupleur à interférence ou un spectromètre.

4. Elément capteur selon l'une des revendications 1 à 3, **caractérisé en ce que** la première source de lumière (601) comprend au moins une diode superluminescente, et/ou la seconde source de lumière (602) comprend un laser à impulsions courtes.

5. Elément capteur selon l'une des revendications 1 à 4, **caractérisé en ce que** ledit au moins un élément de filtre optique planaire (30) comprend un réseau de guides d'ondes (Arrayed-Waveguide-Grating) (30) et/ou un interféromètre de Mach-Zehnder et/ou un interféromètre à ligne de retard et/ou un coupleur directionnel.

6. Elément capteur selon l'une des revendications 1 à 5, **caractérisé en ce que** les réseaux de Bragg à fibres (110) individuels parmi la pluralité de réseaux de Bragg à fibres (110) présentent chacun une constante de réseau (Λ) différente.

7. Elément capteur selon l'une des revendications 1 à 6, **caractérisé en ce que** les longueurs d'onde réfléchies par un réseau de Bragg à fibres (110) non perturbé se situent approximativement entre les courbes d'acceptation (35) des canaux respectifs de l'élément de filtre optique planaire (30).

8. Elément capteur selon l'une des revendications 1 à 7, comprenant en outre un multiplexeur (40) permettant de relier une pluralité de guides d'ondes lumineuses (100a, 100b, 100c, 100d) de manière séquentielle à au moins une source de lumière (60) et/ou à au moins un élément de filtre optique planaire (30).

9. Procédé de détection de grandeurs d'état mécaniques, dans lequel au moins un guide d'ondes lumineuses (100), dans lequel est insérée une pluralité de réseaux de Bragg à fibres (110), s'étend le long d'un trajet de mesure, dans lequel
une lumière provenant d'une première source de lumière (601), ayant au moins une longueur d'ondes moyenne prédéfinissable et une largeur spectrale prédéfinissable, est injectée dans le guide d'ondes lumineuses (100), et
au moins un élément de filtre optique planaire (30) est conçu pour détecter la lumière émise par la première source de lumière (601) et réfléchie par au moins un réseau de Bragg à fibres (110),
en outre, une lumière pulsée à bande spectrale étroite d'une seconde longueur d'ondes différente de la première longueur d'ondes, provenant d'une seconde source de lumière (602), est injectée dans le guide d'ondes lumineuses (100), et
la lumière de la seconde longueur d'ondes, diffusée dans le guide d'ondes lumineuses (100), est amenée à au moins un dispositif de mesure (50) qui mesure un rapport d'intensité d'une ligne de Stokes et d'une ligne anti-Stokes et un temps de parcours d'un signal optique et qui détermine une température à partir du rapport d'intensité,
la source de lumière (60), ledit au moins un guide d'ondes lumineuses (100), ledit au moins un dispositif de mesure (50) et ledit au moins un élément de filtre (30) sont reliés par un point nodal (180).

10. Procédé selon la revendication 9, **caractérisé en ce que** le point nodal (180) comprend un coupleur à interférence ou un spectromètre.

11. Procédé selon l'une des revendications 9 à 10, **caractérisé en ce que** la première source de lumière (601) et la seconde source de lumière (602) fonctionnent en régime pulsé, les temps d'impulsion et de pause étant adaptés les uns aux autres de telle sorte que les deux sources de lumière (601, 602) n'émettent pas de lumière simultanément.

12. Structure mécanique (500), en particulier voile ou élément de commande d'une voile ou d'un câble, comprenant un élément capteur selon l'une des revendications 1 à 8.
